# EUROPEAN PATENT APPLICATION

(11) **EP 4 343 479 A1**
(43) Date of publication of application: **27.03.2024**
(21) Application number: 22196732.6
(22) Date of filing: 20.09.2022
(51) Int. Cl.: G05D 1/02

(54) **ENVIRONMENT RELATED DATA MANAGEMENT FOR A MOBILE MINING VEHICLE**

(71) Applicant: Sandvik Mining and Construction Oy, 33330 Tampere (FI)
(72) Inventor: PUURA, Jussi, 33311 Tampere (FI); von ESSEN, Tomi, 33311 Tampere (FI)
(74) Representative: Sandvik

(57) **Abstract**

Apparatuses, methods, computer programs and systems for environment related data management for a mobile mining vehicle are disclosed. An environment related data management apparatus for a mobile mining vehicle obtains real-time position information of structural body members of the mobile mining vehicle. The apparatus obtains space information of the structural body members of the mobile mining vehicle. The apparatus associates, based on the obtained space information, at least one bounding box with at least one structural body member. The apparatus receives from a sensor configured to scan an environment of the mobile mining vehicle, point cloud data related to the environment of the mobile mining vehicle. In response to determining that data points in the received point cloud data overlap with the associated at least one bounding box, the apparatus generates an overlap indication indicating that at least the overlapping data points are to be excluded.

## Description

### TECHNICAL FIELD

The present disclosure relates to the field of industrial systems, and, more particularly, to environment related data management for a mobile mining vehicle.

### BACKGROUND

When installing sensors, such as a light detection and ranging (lidar) sensor on large mobile mining vehicles, the sensor unavoidably sees the machine itself in addition to the environment. At least in some situations, this may cause problems for, e.g., mapping algorithms and/or obstacle detection algorithms which are designed to see and react to the environment only.

If, e.g., booms, buckets and/or bodies of a mobile mining vehicle cannot be masked out (and removed from input data for the mapping algorithms, obstacle detection algorithms, or the like), they may get added to maps and shown as obstacles to the mobile mining vehicle.

### SUMMARY

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

An example embodiment of an environment related data management apparatus for a mobile mining vehicle comprises at least one processor, and at least one memory including computer program code. The mobile mining vehicle comprises a plurality of structural body members of which at least one structural body member is movable with respect to at least one other structural body member. The at least one memory and the computer program code are configured to, with the at least one processor, cause the apparatus at least to obtain real-time position information of structural body members of the mobile mining vehicle. The real-time position information indicates real-time positions of the structural body members. The at least one memory and the computer program code are further configured to, with the at least one processor, cause the apparatus at least to obtain space information of the structural body members of the mobile mining vehicle. The space information indicates space required by the structural body members. The at least one memory and the computer program code are further configured to, with the at least one processor, cause the apparatus at least to associate, based on the obtained space information of the structural body members, at least one bounding box with at least one structural body member of the plurality of structural body members. The at least one memory and the computer program code are further configured to, with the at least one processor, cause the apparatus at least to receive, from at least one sensor configured to scan an environment of the mobile mining vehicle, point cloud data related to the environment of the mobile mining vehicle. In response to determining that one or more data points included in the received point cloud data overlap with the associated at least one bounding box, the at least one memory and the computer program code are further configured to, with the at least one processor, cause the apparatus at least to generate an overlap indication indicating that at least the one or more overlapping data points in the received point cloud data are to be excluded.

An example embodiment of an environment related data management apparatus for a mobile mining vehicle comprises means for performing: obtaining real-time position information of structural body members of the mobile mining vehicle. The mobile mining vehicle comprises a plurality of structural body members of which at least one structural body member is movable with respect to at least one other structural body member. The real-time position information indicates real-time positions of the structural body members. The means are further configured to perform obtaining space information of the structural body members of the mobile mining vehicle. The space information indicates space required by the structural body members. The means are further configured to perform associating, based on the obtained space information of the structural body members, at least one bounding box with at least one structural body member of the plurality of structural body members. The means are further configured to perform causing the environment related data management apparatus to receive, from at least one sensor configured to scan an environment of the mobile mining vehicle, point cloud data related to the environment of the mobile mining vehicle. In response to determining that one or more data points included in the received point cloud data overlap with the associated at least one bounding box, the means are further configured to perform generating an overlap indication indicating that at least the one or more overlapping data points in the received point cloud data are to be excluded.

An example embodiment of a method comprises obtaining, by an environment related data management apparatus for a mobile mining vehicle, real-time position information of structural body members of the mobile mining vehicle, the real-time position information indicating real-time positions of the structural body members, the mobile mining vehicle comprising a plurality of structural body members of which at least one structural body member is movable with respect to at least one other structural body member; obtaining, by the apparatus, space information of the structural body members of the mobile mining vehicle, the space information indicating space required ny the structural body members; associating, by the apparatus, at least one bounding box with at least one structural body member of the plurality of structural body members based on the obtained space information of the structural body members; receiving, at the apparatus from at least one sensor configured to scan an environment of the mobile mining vehicle, point cloud data related to the environment of the mobile mining vehicle; and in response to determining, by the apparatus, that one or more data points included in the received point cloud data overlap with theassociated at least one bounding box: generating, by the apparatus, an overlap indication indicating that at least the one or more overlapping data points in the received point cloud data are to be excluded.

An example embodiment of a computer program comprises instructions for causing an environment related data management apparatus for a mobile mining vehicle comprising a plurality of structural body members of which at least one structural body member is movable with respect to at least one other structural body member to perform at least the following: obtaining real-time position information of structural body members of the mobile mining vehicle, the real-time position information indicating real-time positions of the structural body members; obtaining space information of the structural body members of the mobile mining vehicle, the space information indicating space required by the structural body members; associating at least one bounding box with at least one structural body member of the plurality of structural body members based on the obtained space information of the structural body members; receiving, from at least one sensor configured to scan an environment of the mobile mining vehicle, point cloud data related to the environment of the mobile mining vehicle; and in response to determining that one or more data points included in the received point cloud data overlap with the associated at least one bounding box: generating an overlap indication indicating that at least the one or more overlapping data points in the received point cloud data are to be excluded.

In an example embodiment, alternatively or in addition to the above-described example embodiments, the at least one memory and the computer program code are further configured to, with the at least one processor, cause the apparatus to exclude at least the one or more overlapping data points from the received point cloud data.

In an example embodiment, alternatively or in addition to the above-described example embodiments, the at least one memory and the computer program code are further configured to, with the at least one processor, cause the apparatus to provide the received point cloud data with the generated overlap indication or the received point cloud data with at least the one or more overlapping data points excluded for use in obstacle detection, such that the at least one or more overlapping data points are to be excluded from the obstacle detection.

In an example embodiment, alternatively or in addition to the above-described example embodiments, the at least one memory and the computer program code are further configured to, with the at least one processor, cause the apparatus to provide the received point cloud data with the generated overlap indication or the received point cloud data with at least the one or more overlapping data points excluded for use in collision detection, such that the at least one or more overlapping data points are to be excludedfrom the collision detection.

In an example embodiment, alternatively or in addition to the above-described example embodiments, the at least one memory and the computer program code are further configured to, with the at least one processor, cause the apparatus to provide the received point cloud data with the generated overlap indication or the received point cloud data with at least the one or more overlapping data points excluded for use in generating a three-dimensional, 3D, model of the environment of the mobile mining vehicle, such that the at least one or more overlapping data points are to be excluded from the generation of the 3D model of the environment.

In an example embodiment, alternatively or in addition to the above-described example embodiments, the at least one memory and the computer program code are further configured to, with the at least one processor, cause the apparatus to provide the received point cloud data with the generated overlap indication or the received point cloud data with at least the one or more overlapping data points excluded for use in modifying a 3D model of a mine associated with the mobile mining vehicle, such that the at least one or more overlapping data points are to be excluded from the modification of the 3D model of the mine.

In an example embodiment, alternatively or in addition to the above-described example embodiments, the at least one memory and the computer program code are further configured to, with the at least one processor, cause the apparatus to provide the received point cloud data with the generated overlap indication or the received point cloud data with at least the one or more overlapping data points excluded for use in driver assistance for generating alarms about detected obstacles, such that the at least one or more overlapping data points are to be excludedfrom the generation of the alarms.

In an example embodiment, alternatively or in addition to the above-described example embodiments, the at least one memory and the computer program code are further configured to, with the at least one processor, cause the apparatus to provide the received point cloud data with the generated overlap indication or the received point cloud data with at least the one or more overlapping data points excluded for use in real-time 3D localization, such that the at least one or more overlapping data points are to be excludedfrom the real-time 3D localization.

In an example embodiment, alternatively or in addition to the above-described example embodiments, the real-time position information, the space information, and the point cloud data are in accordance with a coordinate system associated with the mobile mining vehicle.

In an example embodiment, alternatively or in addition to the above-described example embodiments, the at least one memory and the computer program code are further configured to, with the at least one processor, cause the apparatus to generate an overlap area based on the one or more overlapping data points, wherein the overlap indication indicates that the overlap area is to be excluded.

In an example embodiment, alternatively or in addition to the above-described example embodiments, the overlap area comprises a bounding box -type area.

An example embodiment of a mobile mining vehicle comprises a plurality of structural body members of which at least one structural body member is movable with respect to at least one other structural body member. The mobile mining vehicle further comprises at least one sensor configured to scan an environment of the mobile mining vehicle. The mobile mining vehicle further comprises a control system, configured to provide real-time position information of the structural body members, the real-time position information indicating real-time positions of the structural body members, and space information of the structural body members, the space information indicating space required by the structural body members. The mobile mining vehicle further comprises the environment related data management apparatus according to any of the above-described example embodiments.

In an example embodiment, alternatively or in addition to the above-described example embodiments, the mobile mining vehicle comprises an autonomous mobile mining vehicle.

Many of the features will be more readily appreciated as they become better understood by reference to the following detailed description considered in connection with the accompanying drawings.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** shows an example embodiment of the subject matter described herein illustrating an example mobile mining vehicle, where various embodiments of the present disclosure may be implemented;
**FIG. 2** shows an example embodiment of the subject matter described herein illustrating an example environment related data management apparatus for a mobile mining vehicle, where various embodiments of the present disclosure may be implemented; and
**FIG. 3** shows an example embodiment of the subject matter described herein illustrating a method.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

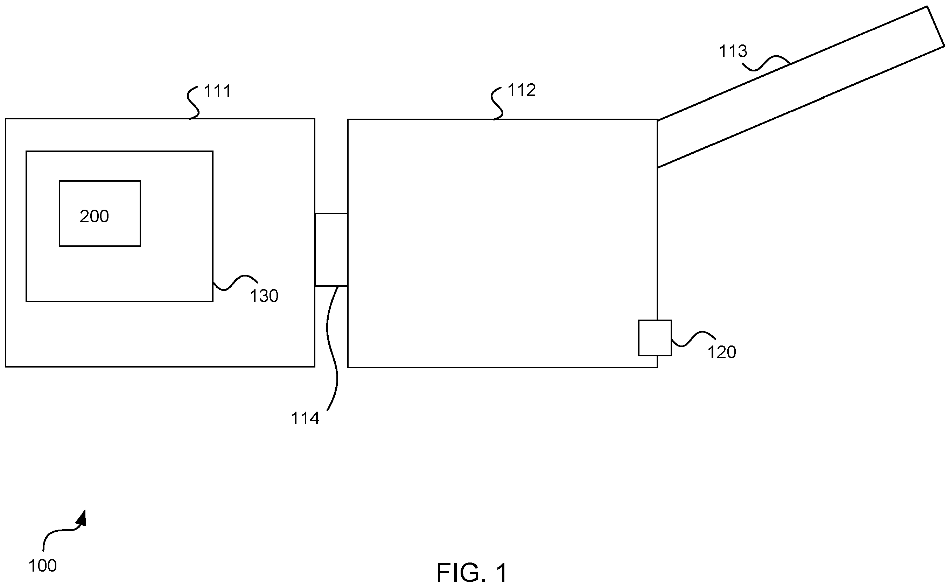

Fig. 1 illustrates an example mobile mining vehicle 100, where various embodiments of the present disclosure may be implemented. For example, the mobile mining vehicle 100 may comprise an autonomous mobile mining vehicle. Furthermore, the mobile mining vehicle 100 may include, e.g., a rock drilling rig, a development drill, a tunneling drilling machine, a surface drilling machine, a bolting or reinforcing vehicle, a rock removal machine, a long hole drill rig, an explosive charging machine, a loader, a transport vehicle, a loading machine or a hauling machine, a setting vehicle of gallery arcs or nets, a concrete spraying machine, a crusher, a measuring vehicle, or a passenger transport vehicle.

The mobile mining vehicle 100 comprises a plurality of structural body members 111-114, such that at least one structural body member is movable (for example, moving at least occasionally) with respect to at least one other structural body member. For example, the structural body members 111-114 may comprise at least one boom. A boom may be provided with a mining work tool. A mining work tool may comprise one or more devices used in underground or surface mining. A mining work tool may comprise, for example, a rock drilling unit, a bolting head, or a bucket.

A boom may be configured to move between different working positions. A working position may comprise, for example, a transport position into which position the boom is moved for moving the mining vehicle from a first location to a second location. As another example, a working position may comprise an operating position for operating, for example, a rock drilling unit provided at a distal end of the boom. As a further example, a working position may comprise an operating position for bucket filling.

In an example, the mobile mining vehicle 100 may comprise articulated steering, such that a first carrier and a second carrier of the mobile mining vehicle 100 are connected via an articulation joint. Hence, the first and the second carriers may move relative to each other when the mobile mining vehicle 100 is steered.

Steering a mobile mining vehicle 100 may comprise, for example, causing a change of position of the mobile mining vehicle 100 from a first position to a second position. A change of position may comprise, for example, movement of the mobile mining vehicle 100 in a particular direction and/or a change of orientation of the mobile mining vehicle 100.

The first carrier may comprise a front carrier and the second carrier may comprise a rear carrier. A front carrier may comprise a first carrier in a forward driving direction. A rear carrier may comprise a carrier following the front carrier in the forward driving direction.

In this example, the structural body members 111-114 may comprise these first and second carriers. At least some of the structural body members 111-114 may be protruding and/or overhanging such as the at least one boom.

The mobile mining vehicle 100 further comprises at least one sensor 120 configured to scan an environment of the mobile mining vehicle 100. The at least one sensor 120 may comprise, for example, a light detection and ranging (lidar) sensor. A lidar sensor is configured to determine a range by targeting an object with a laser and measuring the time for the reflected light to return to the receiver. As another example, the at least one sensor 120 may comprise a radio detection and ranging (radar) sensor. A radar sensor is configured to transmit electromagnetic energy toward objects and observing the echoes returned from them. As a further example, the at least one sensor 120 may comprise a time-of-flight (ToF) camera configured to determine a distance between the camera and a subject by measuring a round trip time of an artificial light signal provided by a laser or an light-emitting diode (LED). At least in some embodiments, the at least one sensor 120 may be attached to the body of the mobile mining vehicle 100. For example, the at least one sensor 120 may be attached to a left and/or right front corner of the mobile mining vehicle 100 with respect to a driving direction of the mobile mining vehicle 100.

The scanning results may be applied to detect a position and/or orientation of the mobile mining vehicle 100 and one or more further elements thereof, such as the position and/or orientation of the at least one sensor 120, or the plurality of structural body members 111-114.

A control system 130 may be configured to compare scanned tunnel profile data to reference profile data stored in a worksite model such as a 3D model of a mine. The control system 130 may be configured to position the mobile mining vehicle 100 on the basis of finding a match in a surface profile indicated by the scanning data and surface profile indicated by the worksite model. The mobile mining vehicle 100 further comprises the control system 130 that is configured to provide real-time position information of the structural body members 111-114. The real-time position information indicates real-time positions of the structural body members 111-114.

For example, the position information may comprise a position and/or an orientation of a structural body member 111-114 in relation to a reference coordinate system. The reference coordinate system may comprise, for example, a global coordinate system, a coordinate system of a worksite where the mobile mining vehicle is operating, or some other coordinate system associated with a predetermined reference point. Alternatively, the reference coordinate system may comprise, e.g., a coordinate system of a main body/carrier of the mobile mining vehicle 100 in reference to which other parts are given.

The control system 130 is further configured to provide space information of the structural body members 111-114. The space information indicates space required by the structural body members 111-114. For example, the control system 130 may comprise a boom control system configured to compute forward kinematics of the booms in real-time and to keep track of poses (e.g., six degrees of freedom (6DOF) poses) of the various boom parts. Forward kinematics may enable the control system 130 to determine a position and orientation of the structural body members 111-114. For example, the control system 130 may be configured to determine a position of and orientation of the at least one boom based on joint values associated with the at least one boom. Based on the forward kinematics, a 6DOF transformation of each moving boom part may be computed. Additionally/alternatively, the control system 130 may comprise a localization system configured to keep track of 6DOF poses of the first and second carriers of the mobile mining vehicle 100 in real-time.

The at least one sensor 120 may be used, e.g., to monitor the environment of the mobile mining vehicle 100 in real-time in order to keep the control system 130 informed about obstacles detected in environment of the mobile mining vehicle 100. However, since the at least one sensor 120 may be attached to the mobile mining vehicle 100 itself, it is possible, e.g., that at times some of the structural body members 111-114 may enter the field of view of the at least one sensor 120 causing such structural body members 111-114 to be erraneously interpreted as obstacles, thereby possibly resulting in false alarms to the control system 130. On the other hand, it is also possible that the mobile mining vehicle fails to see an obstacle, such as a pedestrian, if the obstacle is in between or below or occluded by the booms (or removed by crude filtering methods in an attempt to remove effects of mobile mining vehicle parts), for example. As a result, the obstacle might not be detected at all, and the control system 130 might not receive an alarm, thereby possibly resulting in an accident.

As will be discussed in more detail below, the above issues are addressed by the disclosed environment related data management apparatus 200 and the associated methods and computer programs in such a way that computationally complex and burdensome post-processing of the sensor data from the at least one sensor 120 may be avoided.

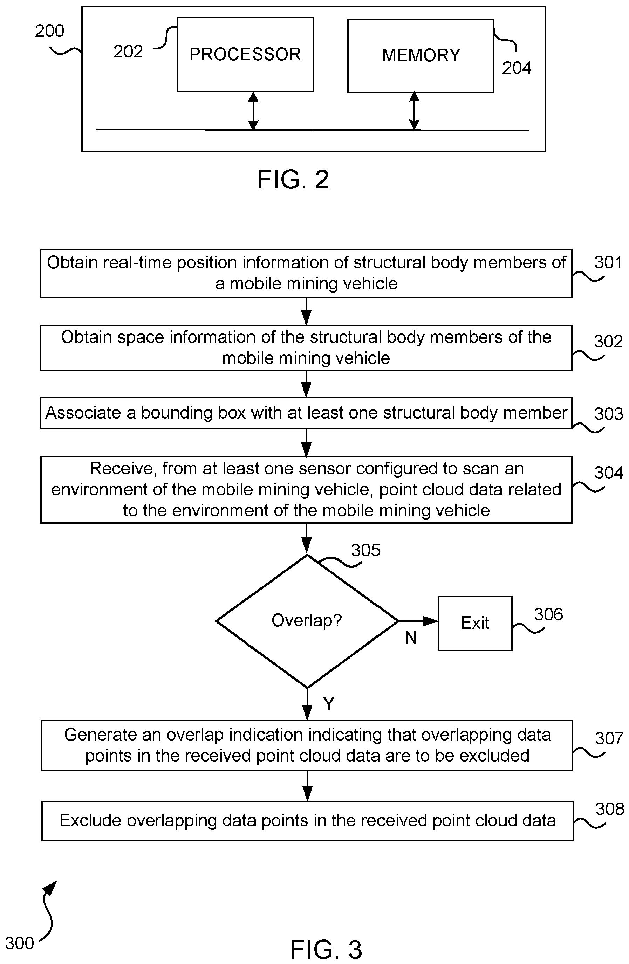

The mobile mining vehicle 100 further comprises an environment related data management apparatus 200. The environment related data management apparatus 200 will be described in more detail below in connection with Fig. 2.

In the following, various example embodiments will be discussed. At least some of these example embodiments may allow environment related data management for the mobile mining vehicle 100. Some of the described features are optional features which may provide further advantages.

Fig. 2 is a block diagram of the environment related data management apparatus 200 for the mobile mining vehicle 100, in accordance with an example embodiment.

The environment related data management apparatus 200 for the mobile mining vehicle 100 comprises at least one processor 202, and at least one memory 204 including computer program code. The apparatus 200 may also include other elements not shown in Fig. 2. Furthermore, at least in some embodiments, the apparatus 200 may be included or integrated in the control system 130.

Although the apparatus 200 is depicted to include only one processor 202, the apparatus 200 may include more processors. In an embodiment, the memory 204 is capable of storing instructions, such as an operating system and/or various applications. Furthermore, the memory 204 may include a storage that may be used to store, for example, at least some of the information and data used in the disclosed embodiments.

Furthermore, the processor 202 is capable of executing the stored instructions. In an embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network chip, an artificial intelligence (AI) accelerator, or the like. In an embodiment, the processor 202 may be configured to execute hard-coded functionality. In an embodiment, the processor 202 is embodied as an executor of software instructions, wherein the instructions may specifically configure the processor 202 to perform the algorithms and/or operations described herein when the instructions are executed.

The memory 204 may be embodied as one or more volatile memory devices, one or more non-volatile memory devices, and/or a combination of one or more volatile memory devices and non-volatile memory devices. For example, the memory 204 may be embodied as semiconductor memories (such as mask ROM, PROM (programmable ROM), EPROM (erasable PROM), flash ROM, RAM (random access memory), etc.).

The at least one memory 204 and the computer program code are configured to, with the at least one processor 202, cause the apparatus 200 at least to obtain real-time position information of the structural body members 111-114 of the mobile mining vehicle 100. As discussed above, the real-time position information indicates real-time positions of the structural body members 111-114, and the mobile mining vehicle 100 has a plurality of structural body members 111-114, such that at least one structural body member is movable with respect to at least one other structural body member. For example, the real-time position information may be obtained via receiving it from the control system 130 or otherwise accessing it. In other words, herein obtaining may comprise accessing or receiving. Furthermore, obtaining the real-time position information may comprise computing a forward kinematics chain to the structural body members 111-114 based on joint position measurements.

The at least one memory 204 and the computer program code are further configured to, with the at least one processor 202, cause the apparatus 200 at least to obtain space information of the structural body members 111-114 of the mobile mining vehicle 100. As discussed above, the space information indicates space required by the structural body members 111-114. For example, the space information may comprise dimension information, such as bounding box -type information. For example, the space information may be obtained via receiving it from the control system 130 or otherwise accessing it.

The at least one memory 204 and the computer program code are further configured to, with the at least one processor 202, cause the apparatus 200 at least to associate, based on the obtained space information of the structural body members 111-114, at least one bounding box with at least one structural body member of the plurality of structural body members 111-114.

For example, a bounding box may define an area or a space via coordinates. At least in some embodiments, when positions (e.g., coordinates) of the structural body members 111-114 and the space required by them are known, the at least one memory 204 and the computer program code may be further configured to, with the at least one processor 202, cause the apparatus 200 to generate a bounding box having known coordinates.

The at least one memory 204 and the computer program code are further configured to, with the at least one processor 202, cause the apparatus 200 at least to receive, from the at least one sensor 120 configured to scan an environment of the mobile mining vehicle 100, point cloud data related to the environment of the mobile mining vehicle 100. For example, the point cloud data may be real-time data. Herein, the term "point cloud data" includes mesh type data.

The point cloud data may comprise a plurality of data points representing, for example, distances between the mobile mining vehicle 100 and objects in the environment of the mobile mining vehicle 100 at a particular time instance. An individual data point included in a point cloud may be presented by, for example, X and Y coordinates, or X, Y and Z coordinates with respect to a particular coordinate frame.

The at least one memory 204 and the computer program code may be further configured to, with the at least one processor 202, cause the apparatus 200 to analyze the received point cloud data. The analyzing may comprise determining coordinate information relating to at least one data point.

In response to determining that one or more data points included in the received point cloud data overlaps with the associated at least one bounding box, the at least one memory 204 and the computer program code are further configured to, with the at least one processor 202, cause the apparatus 200 at least to generate an overlap indication indicating that at least the one or more overlapping data points in the received point cloud data are to be excluded. The excluding of overlapping data points may comprise, e.g., ignoring or removing the overlapping data points, e.g., via masking.

In other words, the overlapping data points are data points of the received point cloud the coordinates of which fall within the associated at least one bounding box.

For example, the real-time position information, the space information, the point cloud data, and a position of the at least one sensor 120 (which is also known) may be in accordance with a (e.g., same) coordinate system associated with the mobile mining vehicle 100. At least in some embodiments, the coordinate system may comprise a Cartesian coordinate system, with the coordinates expressed as, e.g., distance units, such as meters. In other embodiments, the coordinate system may comprise a non-Cartesian coordinate system (such as a polar coordinate system). At least in some embodiments, an origin of the coordinate system may be defined with respect to the mobile minign vehicle 100. An origin of the coordinate system may comprise a predefined point of the mobile mining vehicle 100. For example, the origin of the coordinate system may be located at a center point of a front axle of the mobile mining vehicle 100. Alternatively, the origin of the coordinate system may be located, e.g., at the location of one of the at least one sensor 120.

At least in some embodiments, the at least one memory 204 and the computer program code may be further configured to, with the at least one processor 202, cause the apparatus 200 to exclude at least the one or more overlapping data points from the received point cloud data.

At least in some embodiments, the at least one memory 204 and the computer program code may be further configured to, with the at least one processor 202, cause the apparatus 200 to generate an overlap area based on the one or more overlapping data points. In these embodiments, the overlap indication may indicate that the overlap area is to be excluded. For example, the overlap area may comprise a bounding box -type area. At least in some embodiments, the overlap area may further comprise a tolerance distance.

At least in some embodiments, the at least one memory 204 and the computer program code may be further configured to, with the at least one processor 202, cause the apparatus 200 to control at least one function of the mobile mining vehicle 100 based on the point cloud data from which at least the one or more overlapping data points have been excluded.

At least in some embodiments, the at least one memory 204 and the computer program code may be further configured to, with the at least one processor 202, cause the apparatus 200 to provide the received point cloud data with the generated overlap indication or the received point cloud data with at least the one or more overlapping data points excluded for use in obstacle detection, such that the at least one or more overlapping data points are to be excluded from the obstacle detection.

At least in some embodiments, the at least one memory 204 and the computer program code may be further configured to, with the at least one processor 202, cause the apparatus 200 to provide the received point cloud data with the generated overlap indication or the received point cloud data with at least the one or more overlapping data points excluded for use in collision detection, such that the at least one or more overlapping data points are to be excluded from collision detection.

At least in some embodiments, the at least one memory 204 and the computer program code may be further configured to, with the at least one processor 202, cause the apparatus 200 to provide the received point cloud data with the generated overlap indication or the received point cloud data with at least the one or more overlapping data points excluded for use in generating a three-dimensional, 3D, model of the environment of the mobile mining vehicle 100, such that the at least one or more overlapping data points are to be excluded from the generation of the 3D model of the environment.

At least in some embodiments, the at least one memory 204 and the computer program code may be further configured to, with the at least one processor 202, cause the apparatus 200 to provide the received point cloud data with the generated overlap indication or the received point cloud data with at least the one or more overlapping data points excluded for use in modifying a 3D model of a mine associated with the mobile mining vehicle 100, such that the at least one or more overlapping data points are to be excluded from the modification of the 3D model of the mine.

At least in some embodiments, the at least one memory 204 and the computer program code may be further configured to, with the at least one processor 202, cause the apparatus 200 to provide the received point cloud data with the generated overlap indication or the received point cloud data with at least the one or more overlapping data points excluded for use in driver assistance for generating alarms about detected obstacles, such that the at least one or more overlapping data points are to be excluded from the generation of the alarms.

At least in some embodiments, the at least one memory 204 and the computer program code may be further configured to, with the at least one processor 202, cause the apparatus 200 to provide the received point cloud data with the generated overlap indication or the received point cloud data with at least the one or more overlapping data points excluded for use in real-time 3D localization, such that the at least one or more overlapping data points are to be excluded from the real-time 3D localization.

When the mobile mining vehicle 100 comprises more than one sensor 120 from which point cloud data related to the environment of the mobile mining vehicle 100 is received, the above described masking processing may be performed for the point cloud data from one sensor at a time. Alternatively, the point cloud data from a plurality of the sensors may first be combined, and then the masking processing may be performed at the same time for the combined data.

Further features of the apparatus 200 directly result from the functionalities and parameters of the mobile mining vehicle 100 and thus are not repeated here.

Fig. 3 illustrates an example flow chart of a method 300, in accordance with an example embodiment. In the example of Fig. 3, the method 300 comprises a computer-implemented method.

At operation 301, the environment related data management apparatus 200 for the mobile mining vehicle 100 obtains the real-time position information of the structural body members 111-114 of the mobile mining vehicle 100. As discussed above in more detail, the real-time position information indicates the real-time positions of the structural body members 111-114, with the mobile mining vehicle 100 comprising a plurality of structural body members 111-114, such that at least one structural body member is movable with respect to at least one other structural body member.

At operation 302, the environment related data management apparatus 200 obtains the space information of the structural body members 111-114 of the mobile mining vehicle 100. As discussed above in more detail, the space information indicates space required by the structural body members 111-114.

At operation 303, the environment related data management apparatus 200 associates at least one bounding box with at least one structural body member of the plurality of structural body members 111-114 based on the obtained space information of the structural body members 111-114.

At operation 304, the environment related data management apparatus 200 receives from the at least one sensor 120 configured to scan the environment of the mobile mining vehicle 100, the point cloud data related to the environment of the mobile mining vehicle 100.

In response to determining at operation 305 that one or more data points in the received point cloud data overlaps with the associated at least one bounding box, at operation 307 the environment related data management apparatus 200 generates the overlap indication indicating that at least the one or more overlapping data points in the received point cloud data are to be excluded. Otherwise, the method 300 exits at operation 306.

At optional operation 308, the environment related data management apparatus 200 may exclude at least the one or more overlapping data points from the received point cloud data.

The method 300 may be performed by the apparatus 200 of Fig. 2. The operations 301-308 can, for example, be performed by the at least one processor 202 and the at least one memory 204. Further features of the method 300 directly result from the functionalities and parameters of the apparatus 200, and thus are not repeated here. The method 300 can be performed by computer program(s).

The apparatus 200 may comprise means for performing at least one method described herein. In an example, the means may comprise the at least one processor 202, and the at least one memory 204 including program code configured to, when executed by the at least one processor 202, cause the apparatus 200 to perform the method.

At least some of the disclosed example embodiments may allow environment related data management for the mobile mining vehicle 100.

At least some of the disclosed example embodiments may allow masking to adapt to a real-time position of the mobile mining vehicle 100.

At least some of the disclosed example embodiments may allow ensuring that masking does not remove objects other than parts of the mobile mining vehicle 100.

At least some of the disclosed example embodiments may allow obstacles below and between booms to be visible.

At least some of the disclosed example embodiments may allow avoiding parts of the mobile mining vehicle 100 polluting maps generated based on the point cloud data from the at least one sensor 120.

At least some of the disclosed example embodiments may allow reducing post-processing needed for maps generated based on the point cloud data from the at least one sensor 120.

At least some of the disclosed example embodiments may allow computing in real-time which measurements of the raw data (in the point cloud data) overlap with the physical mobile mining vehicle 100 and which are actual environment of the mobile mining vehicle 100.

At least some of the disclosed example embodiments may allow defining the bounding box of what to filter directly from 3D computer aided design (CAD) files of the structural body members 111-114.

At least some of the disclosed example embodiments may allow separating sensor 120 hits caused by the mobile mining vehicle 100 from those caused by the environment of the mobile mining vehicle 100 to automatically clean the raw data of the point cloud data.

At least some of the disclosed example embodiments may allow correctly detecting obstacles (e.g., pipes) protruding from a ceiling of a mine.

At least some of the disclosed example embodiments may allow correctly ignoring a first and second carrier of a mobile mining vehicle 100 having articulated steering when turning a corner. In conventional systems, the first and/or second carrier could be mistaken as obstacles during the turn, depending on the installation location(s) of the sensor(s), as the first and/or second carrier could suddenly enter the field of view of the sensor(s).

At least some of the disclosed example embodiments may allow reducing delays and heavy and complex computing caused by cleaning maps in post-processing.

At least some of the disclosed example embodiments may allow the mobile mining vehicle to see an obstacle, such as a pedestrian, even when the obstacle is in between or below or occluded by the booms, for example.

The functionality described herein can be performed, at least in part, by one or more computer program product components such as software components. According to an embodiment, the environment related data management apparatus 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Further, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of example embodiments. Although various embodiments have been described above with a certain degree of particularity, or with reference to one or more individual embodiments, those skilled in the art could make numerous alterations to the disclosed embodiments without departing from the scope of this specification.

## Claims

1. An environment related data management apparatus (200) for a mobile mining vehicle (100) comprising a plurality of structural body members (111-114) of which at least one structural body member is movable with respect to at least one other structural body member, the apparatus (200) comprising:
at least one processor (202); and
at least one memory (204) including computer program code;
the at least one memory (204) and the computer program code configured to, with the at least one processor (202), cause the apparatus (200) at least to:
obtain real-time position information of the structural body members (111-114) of the mobile mining vehicle (100), the real-time position information indicating real-time positions of the structural body members (111-114);
obtain space information of the structural body members (111-114), the space information indicating space required by the structural body members (111-114);
associate, based on the obtained space information of the structural body members (111-114), at least one bounding box with at least one structural body member of the plurality of structural body members (111-114);
receive, from at least one sensor (120) configured to scan an environment of the mobile mining vehicle (100), point cloud data related to the environment of the mobile mining vehicle (100); and
in response to determining that one or more data points included in the received point cloud data overlaps with the associated at least one bounding box:
generate an overlap indication indicating that at least the one or more overlapping data points in the received point cloud data are to be excluded.

2. The environment related data management apparatus (200) according to claim 1, wherein the at least one memory (204) and the computer program code are further configured to, with the at least one processor (202), cause the apparatus (200) to exclude at least the one or more overlapping data points from the received point cloud data.

3. The environment related data management apparatus (200) according to claim 2, wherein the at least one memory (204) and the computer program code are further configured to, with the at least one processor (202), cause the apparatus (200) to provide the received point cloud data with the generated overlap indication or the received point cloud data with at least the one or more overlapping data points excluded for use in obstacle detection, such that the at least one or more overlapping data points are to be excluded from the obstacle detection.

4. The environment related data management apparatus (200) according to claim 2 or 3, wherein the at least one memory (204) and the computer program code are further configured to, with the at least one processor (202), cause the apparatus (200) to provide the received point cloud data with the generated overlap indication or the received point cloud data with at least the one or more overlapping data points excluded for use in collision detection, such that the at least one or more overlapping data points are to be excludedfrom the collision detection.

5. The environment related data management apparatus (200) according to any of claims 2 to 4, wherein the at least one memory (204) and the computer program code are further configured to, with the at least one processor (202), cause the apparatus (200) to provide the received point cloud data with the generated overlap indication or the received point cloud data with at least the one or more overlapping data points excluded for use in generating a three-dimensional, 3D, model of the environment of the mobile mining vehicle (100), such that the at least one or more overlapping data points are to be excluded from the generation of the 3D model of the environment.

6. The environment related data management apparatus (200) according to any of claims 2 to 5, wherein the at least one memory (204) and the computer program code are further configured to, with the at least one processor (202), cause the apparatus (200) to provide the received point cloud data with the generated overlap indication or the received point cloud data with at least the one or more overlapping data points excluded for use in modifying a 3D model of a mine associated with the mobile mining vehicle (100), such that the at least one or more overlapping data points are to be excluded from the modification of the 3D model of the mine.

7. The environment related data management apparatus (200) according to any of claims 2 to 6, wherein the at least one memory (204) and the computer program code are further configured to, with the at least one processor (202), cause the apparatus (200) to provide the received point cloud data with the generated overlap indication or the received point cloud data with at least the one or more overlapping data points excluded for use in driver assistance for generating alarms about detected obstacles, such that the at least one or more overlapping data points are to be excludedfrom the generation of the alarms.

8. The environment related data management apparatus (200) according to any of claims 2 to 7, wherein the at least one memory (204) and the computer program code are further configured to, with the at least one processor (202), cause the apparatus (200) to provide the received point cloud data with the generated overlap indication or the received point cloud data with at least the one or more overlapping data points excluded for use in real-time 3D localization, such that the at least one or more overlapping data points are to be excludedfrom the real-time 3D localization.

9. The environment related data management apparatus (200) according to any of claims 1 to 8, wherein the real-time position information, the space information, and the point cloud data are in accordance with a coordinate system associated with the mobile mining vehicle (100).

10. The environment related data management apparatus (200) according to any of claims 1 to 9, wherein the at least one memory (204) and the computer program code are further configured to, with the at least one processor (202), cause the apparatus (200) to generate an overlap area based on the one or more overlapping data points, wherein the overlap indication indicates that the overlap area is to be excluded.

11. The environment related data management apparatus (200) according to claim 10, wherein the overlap area comprises a bounding box -type area.

12. A method (300), comprising:
obtaining (301), by an environment related data management apparatus (200) for a mobile mining vehicle (100) comprising a plurality of structural body members (111-114) of which at least one structural body member is movable with respect to at least one other structural body member, real-time position information of the structural body members (111-114) of the mobile mining vehicle (100), the real-time position information indicating real-time positions of the structural body members (111-114);
obtaining (302), by the apparatus (200), space information of the structural body members (111-114), the space information indicating space required by the structural body members (111-114);
associating (303), by the apparatus (200), at least one bounding box with at least one structural body member of the plurality of structural body members (111-114) based on the obtained space information of the structural body members (111-114);
receiving (304), at the apparatus (200) from at least one sensor (120) configured to scan an environment of the mobile mining vehicle (100), point cloud data related to the environment of the mobile mining vehicle (100); and
in response to determining (305), by the apparatus (200), that one or more data points included in the received point cloud data overlaps with theassociated at least one bounding box:
generating (307), by the apparatus (200), an overlap indication indicating that at least the one or more overlapping data points in the received point cloud data are to be excluded.

13. A computer program comprising instructions for causing an environment related data management apparatus for a mobile mining vehicle comprising a plurality of structural body members of which at least one structural body member is movable with respect to at least one other structural body member to perform at least the following:
obtaining real-time position information of the structural body members of the mobile mining vehicle, the real-time position information indicating real-time positions of the structural body members;
obtaining space information of the structural body members, the space information indicating space required by the structural body members;
associating at least one bounding box with at least one structural body member of the plurality of structural body members based on the obtained space information of the structural body members;
receiving, from at least one sensor configured to scan an environment of the mobile mining vehicle, point cloud data related to the environment of the mobile mining vehicle; and
in response to determining that one or more data points included in the received point cloud data overlaps with the associated at least one bounding box:
generating an overlap indication indicating that at least the one or more overlapping data points in the received point cloud data are to be excluded.

14. A mobile mining vehicle (100), comprising:
a plurality of structural body members (111-114) of which at least one structural body member is movable with respect to at least one other structural body member;
at least one sensor (120) configured to scan an environment of the mobile mining vehicle (100);
a control system (130), configured to provide real-time position information of the structural body members (111-114), the real-time position information indicating real-time positions of the structural body members (111-114), and space information of the structural body members (111-114), the space information indicating space required by the structural body members (111-114); and
the environment related data management apparatus (200) according to any of claims 1 to 11.

15. The mobile mining vehicle (100) according to claim 14, wherein the mobile mining vehicle (100) comprises an autonomous mobile mining vehicle.
